# EUROPEAN PATENT APPLICATION

(11) **EP 4 525 151 A1**
(43) Date of publication of application: **19.03.2025**
(21) Application number: 24193424.9
(22) Date of filing: 07.08.2024
(51) Int. Cl.: H01M 50/209, H01M 50/236, H01M 50/264, H01M 50/291, H01M 50/507

(54) **BATTERY MODULE**

(30) Priority: 05.09.2023 KR 20230117640
(71) Applicant: SAMSUNG SDI CO., LTD., Giheung-gu Yongin-si, Gyeonggi-do 17084 (KR)
(72) Inventor: HONG, Seungjoon, 17084 Yongin-si (KR)
(74) Representative: Marks & Clerk LLP

(57) **Abstract**

A battery module (10) includes: a plurality of battery cells (C); a side plate (100) on a side of the plurality of battery cells; a holder (200) on the plurality of battery cells; a bus bar (300) on the holder and connecting the plurality of battery cells to each other; an end plate (400) connected to the side plate and supporting the plurality of battery cells; a first spacer (500) between two adjacent ones of the plurality of battery cells; and a second spacer (600) between two adjacent other ones of the plurality of battery cells. The second spacer includes a protrusion portion (640). At least a part of the protrusion portion of the second spacer passes through the side plate and is supported on an outer surface of the side plate.

## Description

### BACKGROUND

### 1. Field

Aspects of embodiments of the present disclosure relate to a battery module.

### 2. Description of the Related Art

Secondary batteries refer to batteries that are designed to be charged and discharged, different from primary batteries that are not designed to be recharged. Secondary batteries are used as energy sources for mobile devices, electric vehicles, hybrid vehicles, electric bicycles, and uninterruptible power supplies. Depending on the types of external devices to which the secondary batteries are applied (or connected), the second batteries may be used in the form of a single battery or in the form of modules or packs in which multiple batteries are connected together and bundled into one unit.

In addition, applications to which secondary batteries are applied demand increasingly greater capacities, and accordingly, battery cells with increased energy density have been developed. In particular, as the number and sizes of battery cells included in a battery module increase, the entire size and weight of the battery module increases. Large-sized battery modules are prone to bending in the longitudinal direction and are easily damaged by external shocks.

The background described above is technical information possessed by the inventor for deriving the present disclosure or acquired in the process of deriving the present disclosure, and accordingly, the background may not be said to be known technology known to the general public before the application for the present disclosure is filed.

### SUMMARY

Embodiments of the present disclosure include a battery module that may prevent bending or damage by distributing a load caused by an external load, shock, or the battery module's own weight.

However, these aspects and features are illustrative, and the present disclosure is not limited thereto.

Additional aspects and features will be set forth, in part, in the description that follows and, in part, will be apparent from the description or may be learned by practice of the presented embodiments of the present disclosure.

According to one or more embodiments, a battery module includes a side plate on sides of a plurality of battery cells, a holder on the plurality of battery cells, a bus bar supported on the holder and connecting the plurality of battery cells to each other, an end plate connected to the side plate and supporting the plurality of battery cells, a first spacer between the plurality of battery cells, and a second spacer between the plurality of battery cells and including a protrusion portion, wherein at least a part of the protrusion portion of the second spacer may pass through the side plate and be supported on an outer surface of the side plate.

The at least a part of the protrusion portion may pass through the side plate and be bent toward and fixed to the outer surface of the side plate.

According to an embodiment of the present disclosure, a battery module includes: a plurality of battery cells; a side plate on a side of the plurality of battery cells; a holder on the plurality of battery cells; a bus bar on the holder and connecting the plurality of battery cells to each other; an end plate connected to the side plate and supporting the plurality of battery cells; a first spacer between two adjacent ones of the plurality of battery cells; and a second spacer between two adjacent other ones of the plurality of battery cells. The second spacer includes a protrusion portion. At least a part of the protrusion portion of the second spacer passes through the side plate and is supported on an outer surface of the side plate.

The part of the protrusion portion passing through the side plate may be bent toward and may be fixed to the outer surface of the side plate.

The second spacer may be at a center of the battery module in a longitudinal direction of the battery module.

The battery module may further include a plurality of the second spacers. A first one of the second spacers may be at a center of the battery module in a longitudinal direction of the battery module, and a second one of the second spacers may be between the end plate and the first one of the second spacers.

The second spacer may further include a plurality of sheets and may have an edge portion at an edge of at least one of the sheets. Another part of the protrusion portion may be inserted into or connected to the edge portion.

The protrusion portion may include a protrusion and a groove, and the protrusion may be inserted into a coupling slit in the side plate and bent toward the outer surface of the side plate.

The protrusion may include a plurality of protrusions separated from each other in one direction, and the groove may include a plurality of grooves respectively between adjacent ones of the plurality of protrusions.

The plurality of protrusions may be arranged in parallel in a height direction of the battery module.

The plurality of protrusions may be bent in a same direction after being respectively inserted into a plurality of the coupling slits.

In some embodiments, after the plurality of protrusions are each inserted into the coupling slit, at least some of the plurality of protrusions are bent in a direction that is different from a direction in which the other protrusions are bent.

In some embodiments, at least some of the plurality of protrusions may be bent in a direction that is different from a direction in which other ones of the protrusions are bent after passing through the plurality of coupling slits.

The protrusion may extend in a height direction of the battery module and may be formed as one piece.

A width of the protrusion may be less than a width of the coupling slit and less than an interval between the protrusion and the coupling slit.

A height of the protrusion may be greater than a height of the groove.

The protrusion portion may include a protrusion and a groove. The protrusion portion may further include a body, at least a part of the body may be inserted into or connected to the edge portion and on which the protrusion and the groove are formed. A length of the protrusion may be longer than a length from an end of the edge portion to an end of the body.

The side plate may include an outer plate having a coupling slit into which the part of the protrusion is inserted and an inner plate on an inner surface of the outer plate and having a heat dissipation slit, and the part of the protrusion portion passing through the coupling slit may be fixed to an outer surface of the outer plate.

The heat dissipation slit may include a plurality of heat dissipation slits, and the coupling slit may be aligned with one or more of the plurality of heat dissipation slits.

The heat dissipation slit may include a plurality of heat dissipation slits, and the coupling slit may include a plurality of coupling slits respectively provided between two adjacent ones of the heat dissipation slits in one direction.

At least some of the above and other features of the invention are set out in the claims.

Aspects and features other than the above aspects and features will become apparent from the detailed description, claims, and/or drawings below.

### BRIEF DESCRIPTION OF THE DRAWINGS

The above and other aspects and features of embodiments of the present disclosure will be more apparent from the following description, taken in conjunction with the accompanying drawings, in which:
FIG. 1 is an exploded perspective view of a battery pack module;
FIG. 2 illustrates a plurality of battery cells, a first spacer, and a second spacer;
FIG. 3 illustrates one surface of a side plate;
FIG. 4 is a cross-sectional view taken along the line IV-IV' in FIG. 3;
FIG. 5 is an exploded perspective view of the first spacer;
FIG. 6 is an exploded perspective view of the second spacer;
FIG. 7 is an enlarged view of a part of the second spacer;
FIGS. 8 and 9 are enlarged views of the second spacer inserted into the side plate;
FIG. 10 is an enlarged view of the second spacer inserted into the side plate; and
FIG. 11 is an enlarged view of the second spacer inserted into the side plate.

### DETAILED DESCRIPTION

Reference will now be made, in detail, to embodiments, examples of which are illustrated in the accompanying drawings. The presented embodiments may have different forms and should not be construed as being limited to the descriptions set forth herein. Accordingly, embodiments are merely described below, by referring to the figures, to explain aspects and features of the present description.

Some embodiments of the present disclosure and methods according thereto may be understood by referring to the detailed descriptions and drawings of the embodiments. The described embodiments may have various modifications and may be implemented in different forms, and as such, the present disclosure is not limited to the embodiments described herein. Also, some or all of the features of various embodiments of the present disclosure may be combined with each other. Respective embodiments may be implemented independently or in relation to each other. The described embodiments are provided as examples to ensure that the present disclosure is complete and completely transfers the idea of the present disclosure to those skilled in the art to which the present disclosure pertains. The present disclosure includes all modifications, equivalents, and substitutions within the idea and technical scope of the present disclosure. Accordingly, processes, elements, and technologies that are not necessary for those skilled in the art to have a complete understanding of the embodiments of the present disclosure may not be described or may be only briefly described.

Unless otherwise described throughout the accompanying drawings and specification, the same reference numerals, symbols, or combinations thereof indicate the same components, and accordingly, redundant descriptions thereof are omitted. Also, in order to clearly describe the present disclosure, parts unrelated to the description are omitted.

Relative sizes of elements, layers, and regions in the drawings may be exaggerated for clarity. The use of hatching and/or shading in the accompanying drawings generally serves to clarify a boundary between adjacent elements. Accordingly, the presence or absence of hatching or shading does not indicate a specific form or requirement for a particular material, material properties, dimensions, proportions, commonality between figure elements, and/or other characteristics, properties, attributes, and so on of the elements unless specified.

Various embodiments are described herein with reference to cross-sectional examples that are schematic illustrations of embodiments and/or intermediate structures. Accordingly, shapes in the drawings may be changed as a result of manufacturing, for example, techniques and/or tolerances. In addition, the specific structural or functional description disclosed in the present disclosure is merely an example illustrating embodiments according to the present disclosure. Accordingly, the embodiments disclosed in the present disclosure should not be construed as being limited to a shape of the illustrated region and include, for example, a variation in shape due to manufacturing.

The regions illustrated in the drawings are schematic in nature and shapes thereof are not intended to be illustrative or limiting actual shapes of regions of a device. Also, as those skilled in the art recognize, the described embodiments may be modified in various ways without departing from the idea or scope of the present disclosure.

Numerous specific details are set forth in the specification to provide thorough understanding of various embodiments. However, various embodiments may be performed without or including one or more of the details. In another example, well-known structures and devices are illustrated in block diagrams to avoid unnecessarily obscuring various embodiments.

Spatially relative terms, such as "below", "above", "lower portion", and "upper portion" may be used to describe a relationship of one element or feature to another element or feature as illustrated in the drawings. The spatially relative terms are intended to include various directions of a device in use or operation in addition to the directions illustrated in the drawings. For example, when the device in the drawings is turned over, other elements or features described as "below" or "lower portion" face "above" the other elements or features. Accordingly, as illustrative terms, "below" and "lower portion" may include both up and down directions. A device may be oriented in different directions (for example, rotating 90 degrees or in another direction) and the spatially relative description used herein should be interpreted according thereto. Similarly, when the first portion is described as being disposed "on" the second portion, this means that the first portion is disposed above or below the second portion.

In addition, the expression "viewed from a plane" refers to a case where an object is viewed from above, and the expression "in a schematic cross-sectional view" refers to a case where a schematic cross-section is taken by cutting the object vertically. The term "viewed from the side" means that the first object may be above, below or on the side of the second object and vice versa. Also, the term "overlap" or "synthesize" may include a layer, stack, a surface, extension, covering, partially covering, or any other suitable term that is understood and understandable by those skilled in the art. The expression "does not overlap" may include meaning, such as "apart from" or "separated from" and any other suitable equivalents recognized and understood by those skilled in the art. The terms "surface" and "front surface" may mean that the first object may directly or indirectly face the second object. When there is the third object between the first object and the second object, the first object faces the second object but may be understood as indirectly opposing each other.

When an element, layer, region or component is described as being "formed", "connected", or "coupled" to another device, the device may be formed directly in the layer, region or component, be formed in another element, layer, region or component, be directly formed in another component, connected or coupled to another component. Also, connections of one or more elements, layers, regions, or components may collectively refer to direct or indirect coupling or connections and integral or non-integral coupling or connections of the elements, layers, regions, or components. For example, when an element, layer, region, or component is referred to as being "electrically connected" or "electrically coupled" to another element, layer, region, or component, this means that the element, layer, region, or component may be directly electrically connected or coupled to another element, layer, region or component, or there may be other elements, layers, regions or components. However, "direct connection" or "direct coupling" means that one component is directly connected or coupled to another component without an intermediate component, or is on another component. Also, in the present specification, when a part of a layer, film, region, guide plate, or so on is formed in another part, the formation direction is not limited to an upper direction and includes that the part is formed on the side or bottom. In contrast to this, when a part of a layer, film, region, guide plate, or so on is formed "under" another part, not only that the part is "directly underneath" the other part, but also that another part is between the part and the other part are included therein. In addition, other expressions that describe relationships between components, such as "between", "immediately between", "adjacent to", and "immediately adjacent to" may be interpreted similarly. Also, when an element or layer is referred to as being "between" two elements or layers, this may mean that the element or layer is the only element between two elements or layers, or there may be another element therebetween.

For the purposes of the present specification, expressions, such as "at least one" or "any one", do not limit the order of individual elements. For example, "at least one of X, Y and Z", "at least one of X, Y or Z", and "at least one selected from a group including X, Y, and Z may include only X, only Y, only Z, and any combination of two or more of X, Y and Z. Similarly, expressions, such as "at least one of A and B" and "at least one of A or B", may include A, B, or A and B. As used herein, the term "and/or" generally includes any combination of one or more related list items. For example, an expression, such as "A and/or B" may include A, B, or A and B.

Although terms "first", "second", "third", and so on may be used herein to describe various elements, components, regions, layers, and/or cross-sections, the elements, components, regions, layers, and/or cross-sections are not limited by the terms. The terms are used to distinguish one element, component, region, layer, or cross-section from another element, component, region, layer, or cross-section. Accordingly, a first element, component, region, layer, or cross section described below may be referred to as a second element, component, region, layer, or cross section without departing from the idea and scope of the present disclosure. Describing an element as a "first" element may not require or imply the presence of a second or another element. Terms, such as "first", "second", and so on may be used herein to distinguish different categories or sets of elements. For the sake of clarity of description, terms, such as "first", "second", and so on may respectively refer to a "first category (or first set) ", a "second category (or second set) ", and so on.

The terms used in the present application are only used to describe specific embodiments and are not intended to limit the present disclosure. As used herein, a singular term may include plural terms, and the plural terms may also include the singular term, unless the context clearly dictates otherwise. Terms "include", "comprise", and "have" used herein mean designating the presence of specified features, integers, or operations. The expressions do not exclude the presence or addition of one or more other functions, steps, operations, components and/or groups thereof.

When one or more embodiments may be implemented differently, certain process sequences may be performed differently from the described order. For example, two processes described in succession may be performed substantially simultaneously or may be performed in an opposite order.

Terms "substantially", "about", and "approximately", and similar terms are used as terms of approximation rather than terms of degree and are intended to describe inherent variations in measured or calculated values. As used herein, the term "substantially", "about", "approximately", and similar terms are used as terms of approximation and not as terms of degree, and are intended to account for the inherent deviations in measured or calculated values that would be recognized by those of ordinary skill in the art. "About" or "approximately", as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure".

Unless otherwise defined, all terms, which are used herein and include technical or scientific terms, have the same meaning as commonly understood by those skilled in the technical field to which the present disclosure pertains. Terms, such as terms defined in commonly used dictionaries, should be construed to have meaning consistent with meaning in the context of the relevant art and/or the present specification and are not to be construed in an idealized or overly formal sense unless explicitly defined herein.

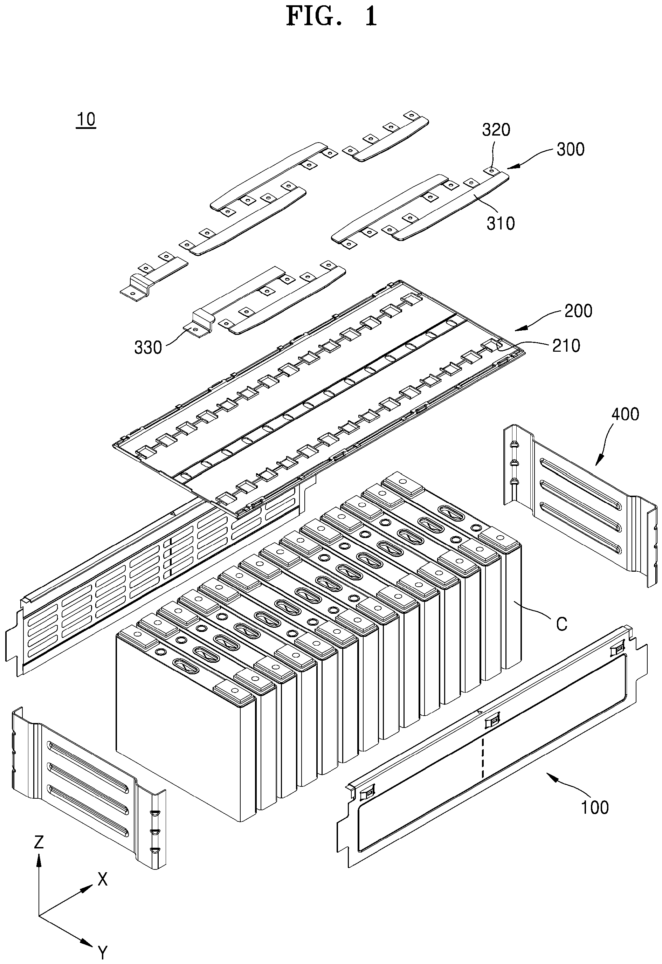

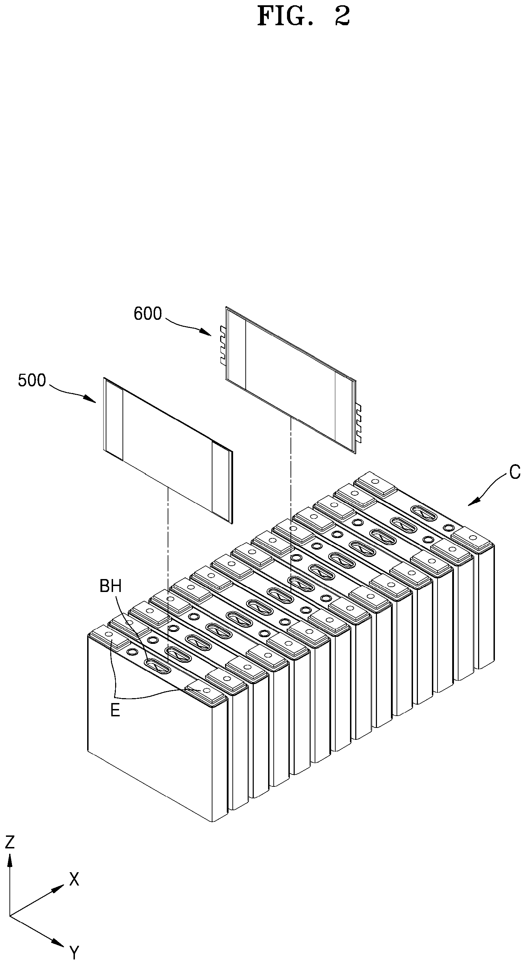

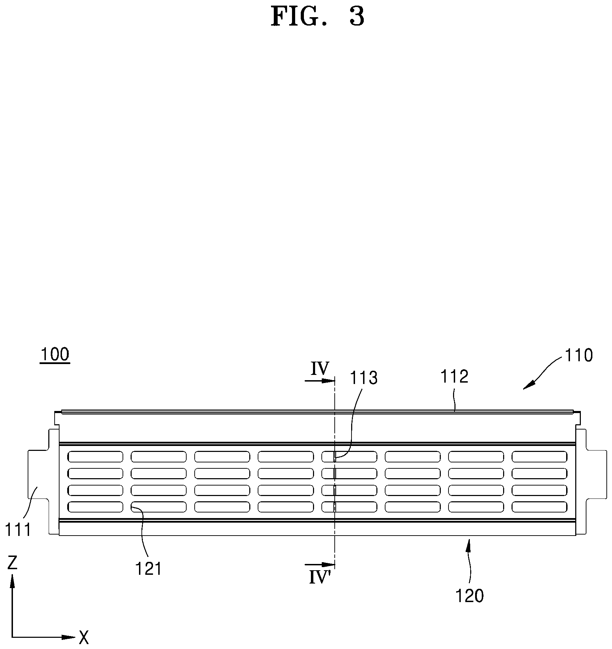

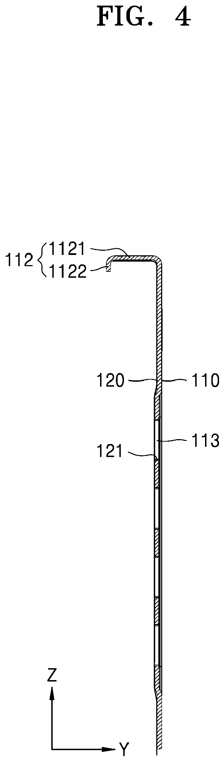

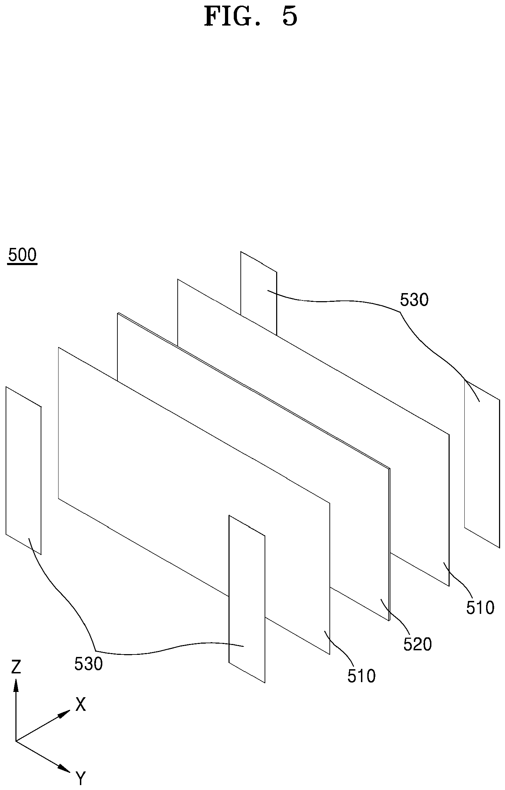

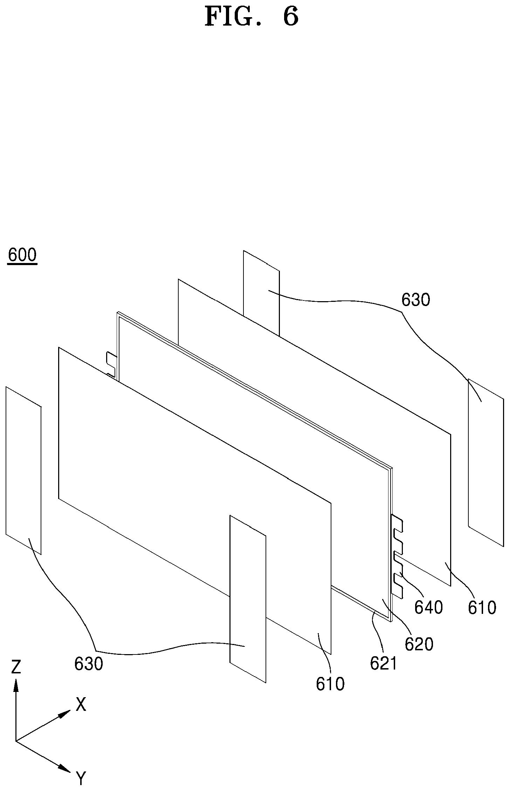

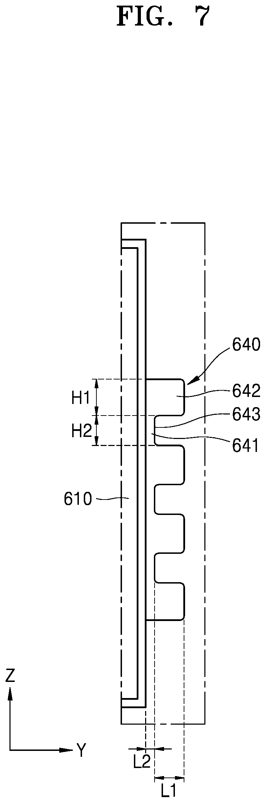

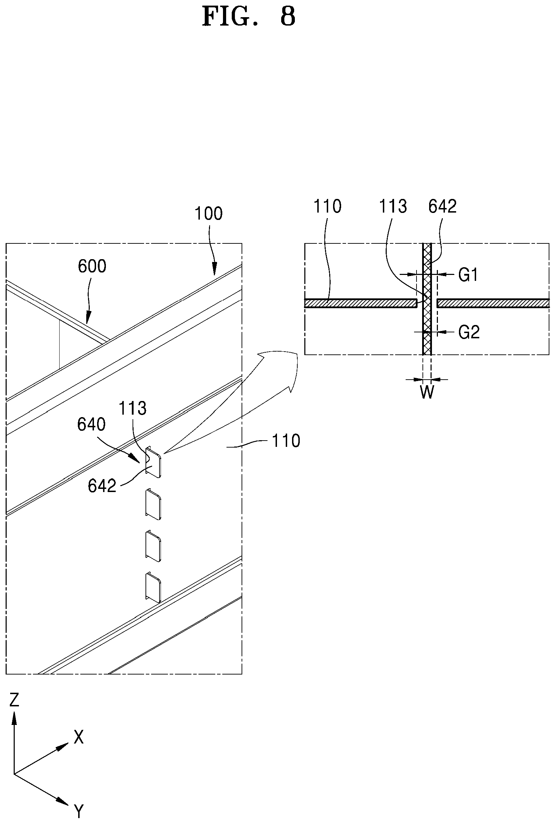

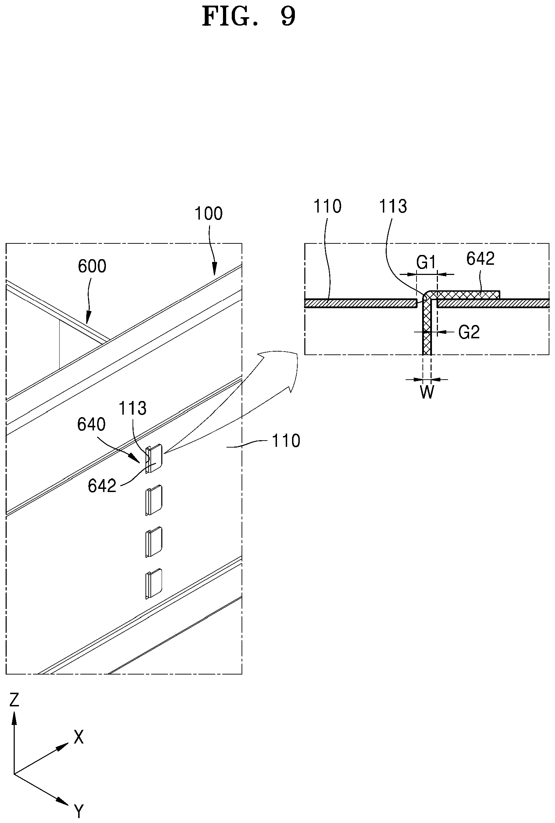

FIG. 1 is an exploded perspective view of a battery module 10, FIG. 2 illustrates a plurality of battery cells C, a first spacer 500, and a second spacer 600, FIG. 3 illustrates one surface of a side plate 100 of the battery module 10, FIG. 4 is a cross-sectional view taken along the line IV-IV' in FIG. 3, FIG. 5 is an exploded perspective view of the first spacer 500, FIG. 6 is an exploded perspective view of the second spacer 600, FIG. 7 is an enlarged view of a part of the second spacer 600, and FIGS. 8 and 9 are enlarged views of the second spacer 600 inserted into the side plate 100.

The battery module 10 is a battery assembly in which the plurality of battery cells C are grouped into one group to protect the plurality of battery cells C from external shock, heat, vibration, and so on. The battery module 10 may include battery cells having a prismatic shape, a pouch shape, or a cylindrical shape. Hereinafter, the description will focus on an embodiment in which the battery module 10 includes battery cells having the prismatic shape, but the present disclosure is not limited thereto. The battery module 10 may be applied to a large application, such as an energy storage system (ESS), or a small application, such as a power tool. For example, the battery module 10 may be applied to an electric vehicle. The battery module 10 may be used alone or may be electrically connected to another battery module to form a battery pack.

The battery module 10 may include the plurality of battery cells C, side plates 100, a holder 200, a bus bar 300, end plates 400, the first spacer 500, and the second spacer 600. The first spacer 500 may include a plurality of first spacers 500 and the second spacer 600 may include a plurality of second spacers 600. For example, the battery module 10 may include the side plates 100 on sides (e.g., short sides) of the plurality of battery cells C, the holder 200 on upper portions of the plurality of battery cells C, the bus bar 300 supported by the holder 200 and connecting the plurality of battery cells C to each other, the end plates 400 connected to the side plates 100 and supporting the plurality of battery cells C, the first spacer 500 between adjacent battery cells from among the plurality of battery cells C, and the second spacer 600 between adjacent battery cells from among the plurality of battery cells C and including a protrusion portion 640. At least a part of the protrusion portion 640 may pass through the side plate 100 to be supported at (or on) an outer surface of the side plate 100.

The number and arrangement of the plurality of battery cells C may be varied depending on specifications and design targets of the battery module 10. For example, 14 battery cells C may be arranged in the horizontal direction (e.g., in a longitudinal direction of the battery module 10, in the X-axis direction in the drawings). The number and arrangement of the plurality of battery cells C are not limited thereto and may be changed in various ways. For example, the plurality of battery cells C may be arranged in one or more rows and may be connected to each other in series and/or in parallel. The plurality of battery cells C may each include two electrodes E and a vent hole BH. For example, the vent hole BH may be near (or at) an upper center of the battery cell C. When the battery cell C is damaged or operates abnormally and gas is generated inside the battery cell C, the vent hole BH may allow the generated gas to be discharged to the outside of the battery cell C. The two electrodes E are on an upper surface of the battery cell C and may face each other with the vent hole BH therebetween. The two electrodes E may be a negative electrode and a positive electrode, respectively. The two electrodes E of each of the plurality of battery cells C may be connected to each other through the bus bar 300.

The side plates 100 form an outer frame of the battery module 10 and may be on at least one side of the plurality of battery cells C. For example, two side plates 100 may be respectively on both sides (e.g., in the Y-axis direction) of the plurality of battery cells C. The side plate 100 may partition a space in which the plurality of battery cells C are accommodated. The side plates 100 may be in contact with sides of the plurality of battery cells C or may be separated (or spaced apart) from the sides of the plurality of battery cells C. The side plate 100 may have a long plate shape in a longitudinal direction (e.g., the X-axis direction) of the battery module 10, and both ends of the side plates 100 may each be connected to the end plates 400.

The side plate 100 may include an outer plate 110 and an inner plate 120. For example, the side plate 100 may include the outer plate 110 having a coupling slit 113 into which at least a part of the protrusion portion 640 is inserted and the inner plate 120 that is on an inner side of the outer plate 110 and has a heat dissipation slit 121. At least a part of the protrusion portion 640 may pass through the coupling slit 113 to be fixed on an outer surface of the outer plate 110.

The outer plate 110 may be on the outside of the side plate 100, that is, opposite to the plurality of battery cells C, and may support the inner plate 120 on an inner side, that is, a side facing the plurality of battery cells C. The outer plate 110 has coupling portions 111 at both ends in the longitudinal direction, and the coupling portions 111 may each be connected to the end plates 400. The outer plate 110 may be connected to the end plates 400 through the coupling portion 111 by welding or screwing. The outer plate 110 may have a larger area than the inner plate 120, and a part of the outer plate 110 may protrude or may be bent toward the plurality of battery cells C. For example, as illustrated in FIG. 4, the outer plate 110 may have a bent portion 112 at where an upper edge is bent toward the plurality of battery cells C. The bent portion 112 may be connected to another portion of the battery module 10. For example, the bent portion 112 of the outer plate 110 may be connected to a corner of the holder 200. The bent portion 112 may have a first portion 1121 extending toward the plurality of battery cells C and a second portion 1122 extending downwardly from the first portion 1121. The first portion 1121 may extend from an upper edge of the outer plate 110 in a width direction (e.g., the Y-axis direction) of the battery module 10, and the second portion 1122 may extend downwardly from an end of the first portion 1121 in a height direction (e.g., the Z-axis direction) of the battery module 10. At least a part of the second portion 1122 may be inserted into or fastened to a corner corresponding to a long side of the holder 200 to connect the side plate 100 to the holder 200.

The outer plate 110 may have a coupling slit 113. One or more coupling slits 113 may be formed in the outer plate 110 such that the protrusion portion 640 of the second spacer 600 may be inserted into the coupling slit 113. The coupling slit 113 may be substantially near a central portion of the outer plate 110 or the side plate 100 in the longitudinal direction (e.g., the X-axis direction) of the battery module 10. For example, the coupling slit 113 may be within ±10 % or within ± 20% of the center of the outer plate 110 in the longitudinal direction. Therefore, by inserting the protrusion portion 640 into the coupling slit 113, the center of the battery module 10 may be supported against or prevented from bending downwardly or deforming due to a weight of the battery module 10. The coupling slit 113 may have a greater width and a greater height than the protrusion portion 640. The coupling slit 113 may include a plurality of coupling slits 113. For example, as illustrated in FIGS. 3 and 4, the plurality of (for example, four) coupling slits 113 may be separated from each other in a height direction (e.g., the Z-axis direction) of the battery module 10. The plurality of coupling slits 113 may be arranged in a line. The plurality of coupling slits 113 may each correspond to the heat dissipation slit 121 in the inner plate 120. The heat dissipation slit 121 may include a plurality of heat dissipation slits 121, and as illustrated in FIG. 3, the plurality of coupling slits 113 may be inside (or may be aligned with) the plurality of heat dissipation slits 121. Accordingly, the protrusion portion 640 of the second spacer 600 may be inserted into the heat dissipation slit 121 and the coupling slit 113 to be exposed to the outside of the side plate 100. A height of the coupling slit 113 may be equal to or less than a height of the heat dissipation slit 121. The protrusion portion 640 protruding out of (e.g., protruding beyond) the side plate 100 through the coupling slit 113 may be bent toward an outer surface of the side plate 100. In another embodiment, the plurality of coupling slits 113 may be respectively outside the plurality of heat dissipation slits 121. For example, the plurality of coupling slits 113 may each be between two heat dissipation slits 121 adjacent to each other in one direction (e.g., the X-axis direction).

The inner plate 120 may be inside the side plate 100 and may be supported on the outer plate 110. FIG. 3 illustrates the side plate 100 as viewed from the battery cells C and illustrates an inner surface of the side plate 100. As illustrated in FIG. 3, the inner plate 120 may be on an inner surface of the outer plate 110 and may have a smaller area than the outer plate 110. The inner plate 120 may reinforce the rigidity of the outer plate 110 and transfer heat generated from the plurality of battery cells C to the outer plate 110. The outer plate 110 may be formed of the same material as or a different material from the inner plate 120. For example, both the outer plate 110 and the inner plate 120 may be formed of metal and/or plastic. The inner plate 120 may be formed of a material with higher rigidity than a material of the outer plate 110. Also, the outer plate 110 may have higher thermal conductivity than the inner plate 120. However, in other embodiments, the inner plate 120 may have higher thermal conductivity than the outer plate 110, and the outer plate 110 may also be formed of a material with higher rigidity than a material of the inner plate 120.

The inner plate 120 may have the plurality of heat dissipation slits 121. As illustrated in FIG. 3, the plurality of heat dissipation slits 121 may be formed in the inner plate 120. For example, the coupling slit 113 may be formed inside (e.g., may be aligned with) one or more of the plurality of heat dissipation slits 121. In another embodiment, the coupling slit 113 may include one or more coupling slits 113 between adjacent two heat dissipation slits 121 in one direction from among the plurality of heat dissipation slits 121. The plurality of heat dissipation slits 121 may be arranged in a plurality of columns and rows in the longitudinal direction (e.g., the X-axis direction) of the battery module 10 and the height direction (e.g., the Z-axis direction) of the battery module 10. The plurality of heat dissipation slits 121 may each have a long hole shape (e.g., an oval shape) in one direction (e.g., the X-axis direction). Accordingly, the inner plate 120 may reinforce the rigidity of the outer plate 110 and, at the same time, may allow heat generated from the plurality of battery cells C to be directly transferred to the outer plate 110 through the plurality of heat dissipation slits 121. Therefore, heat generated from the plurality of battery cells C may be efficiently discharged to the outside of the battery module 10. The number and arrangement of the plurality of heat dissipation slits 121 are not limited and may be changed depending on the specifications and size of the battery module 10 and the number, capacities, and so on of the plurality of battery cells C.

The holder 200 may be provided in the battery module 10 to support the plurality of battery cells C and the bus bar 300. The holder 200 may be on the plurality of battery cells C and may have a plurality of openings 210 to respectively expose the plurality of electrodes E included in the plurality of battery cells C. The plurality of openings 210 may be formed at positions corresponding to the plurality of electrodes E. Corners of the holder 200 may be connected to the side plates 100 and the end plates 400. For example, the holder 200 may have a rectangular shape having two long sides and two short sides, and corners thereof corresponding to the two long sides may be respectively connected to the bent portions 112 of the two side plates 100. Also, corners of the holder 200 corresponding to the two short sides may be connected to the two end plates 400. The holder 200 may be connected to the side plates 100 and the end plates 400 by welding, screwing, or so on. In a state in which the holder 200 is on the plurality of battery cells C, the bus bar 300 may be supported on the holder 200.

The bus bar 300 may include a plurality of connection portions 320 respectively corresponding to the plurality of openings 210 to connect the plurality of battery cells C to each other. The bus bar 300 may include a plurality of bodies 310 and the plurality of connection portions 320 extending from the plurality of bodies 310. The plurality of bodies 310 may each have a rod shape elongated in a longitudinal direction (e.g., the X-axis direction) of the battery module 10, and the plurality of connection portions 320 may extend from the plurality of bodies 310. While the plurality of bodies 310 are supported on the holder 200, the plurality of connection portions 320 respectively extend to the plurality of openings 210 and may be respectively connected to the plurality of electrodes E of the plurality of battery cells C, which are exposed through the plurality of openings 210. The plurality of connection portions 320 may be respectively and electrically connected to the plurality of electrodes E by welding or mechanical members (e.g., screws). Accordingly, the plurality of battery cells C may be electrically connected to each other through the bus bar 300. The bus bar 300 may further include an external terminal 330. The external terminal 330 may include a plurality of external terminals. For example, the external terminal 330 may be formed at an end of one of the plurality of bodies 310 and may protrude to the outside of the holder 200. When the battery module 10 is combined with another battery module to form a battery pack, the external terminal 330 may electrically connect the battery module 10 to the other battery module. In some cases, the external terminal 330 may be connected to a battery management system (BMS) of the battery pack.

The end plate 400 may include a plurality of end plates 400 provided on the battery module 10 to protect the plurality of battery cells C from external shock or foreign material. For example, two end plates 400 may be respectively at both ends of the battery module 10 in a longitudinal direction. The two end plates 400 may be respectively connected to the coupling portions 111 of the two side plates 100. Also, the two end plates 400 may be connected to the holder 200. The two end plates 400 may provide compressive force toward the center of the battery module 10 to cause the plurality of battery cells C, the plurality of first spacers 500, and the plurality of second spacers 600 to be in close contact with each other such that the plurality of battery cells C, the plurality of first spacers 500, and the plurality of second spacers 600 may be maintained at the designed positions without deviating therefrom.

The first spacer 500 may be inserted between two of the plurality of battery cells C. In some cases, the first spacer 500 may be between the end plate 400 and the battery cell C at an end of the battery module 10 from among the plurality of battery cells C. For example, the plurality of battery cells C and the plurality of first spacers 500 may be alternately arranged. The first spacer 500 may have a thin plate shape and may insulate adjacent battery cells C from each other by preventing the adjacent battery modules C from coming into contact with each other. Also, the first spacer 500 may prevent adjacent battery cells C from being damaged or deformed due to direct contact with or pressing against each other. Also, the first spacer 500 may maintain an interval between adjacent battery cells C to form a passage for external air, and accordingly, the plurality of battery cells C may be effectively cooled and a movement path for a fire extinguishing agent may be provided. In addition, at least a part of the first spacer 500 may include a flame-retardant material and/or an insulating material or may include an additional member formed of a flame-retardant material and/or an insulating material, and accordingly, fire occurring in one battery cell C may be prevented from spreading to another battery cell C. The first spacer 500 may have a width corresponding to the battery cell C and may have a height that is less than or equal to a height of the battery cell C. The first spacer 500 may be separated from the battery cell C. For example, the first spacer 500 may be separated from two adjacent battery cells C by a distance (e.g., a preset or predetermined distance). The first spacer 500 may be separated from the battery cell C by a range of about 0.1 mm to about 10 mm. In another embodiment, the first spacer 500 may be separated from the battery cell C by a range of about 0.5 mm to about 8 mm. In another embodiment, the first spacer 500 may be separated from the battery cell C by a range of about 1 mm to about 5 mm. In some embodiments, the separated distance may be a thickness of an adhesive member 530, described below, and may be an interval between the battery cell C and a second sheet 520.

The first spacer 500 may include a first sheet 510, a second sheet 520, and the adhesive member 530.

The first spacer 500 may include a plurality of first sheets 510 which are formed of an insulating material and/or a thermal insulating material. The first sheet 510 may have the same or similar size and shape as the first spacer 500. For example, the first sheet 510 may have a rectangular shape elongated in a width direction (e.g., the Y-axis direction) of the battery module 10. The first spacer 500 may include the plurality of first sheets 510. For example, as illustrated in FIG. 5, two first sheets 510 may be respectively on one side and the other side of the second sheet 520, and accordingly, a total of two first sheets 510 may be included in one first spacer 500. In another embodiment, one first sheet 510 may be on one side or the other side of the second sheet 520, or two or more first sheets 510 may be on one side and the other side of the second sheet 520. The first sheet 510 may be formed of a material with excellent thermal insulation properties. For example, the first sheet 510 may be mica or ceramic paper. Also, the first sheet 510 may include (or may further include) aerogel. The aerogel particle content may be more than about 80 %, and the remainder may be formed of a binder. The aerogel particle content may be in a range of about 80 % to about 90 %. When the aerogel particle content is less than about 80 %, heat propagation between adjacent battery cells C may not be sufficiently blocked, and when the aerogel particle content is greater than about 90 %, the binder content is relatively small, and accordingly, the first sheet 510 may not be formed. The size of an aerogel particle may be in a range of about 10 mm to about 100 mm and more than about 90 % of the aerogel particles may have nano-sized pores. The first sheet 510 may have a fine pore structure formed by a nano-sized composite structure connected in a SiO₂ structure, and air may be contained in the pore structure. The air contained in the pore structure may form an air layer. The air layer is maintained in the pores of an SiO₂ composite, and air has excellent insulating properties to be used as an insulating material. In another embodiment, the first sheet 510 may be formed of a flame retardant material. For example, the first sheet 510 may be ceramic paper of a refractory insulator including fiber. In another embodiment, the first sheet 510 may be bio-soluble fiber ceramic paper (e.g., ceramic fiber) including alkaline earth metal and may be an eco-friendly high-temperature refractory insulator that is harmless to the human body.

The first spacer 500 may include a plurality of second sheets 520, which are formed of an insulating material and/or a thermal insulating material. The second sheet 520 may have the same or similar size and shape as the first spacer 500. For example, the second sheet 520 may have a rectangular shape with a long side in a width direction (e.g., the Y-axis direction) of the battery module 10. The second sheet 520 may be between two of the plurality of first sheets 510. For example, as illustrated in FIG. 5, one second sheet 520 may be between two first sheets 510. In another embodiment, a plurality of second sheets 520 may be between the plurality of first sheets 510, or a plurality of second sheets 520 may be alternately arranged with the plurality of first sheets 510. The second sheet 520 may be formed of a material with excellent thermal insulation properties. For example, the second sheet 520 may be mica or ceramic paper. Also, the second sheet 520 may include (or may further include) aerogel. The aerogel particle content is more than about 80 %, and the remainder may be formed of a binder. The aerogel particle content may be in a range of about 80 % to about 90 %. When the aerogel particle content is less than about 80 %, heat propagation between adjacent battery cells C may not be sufficiently blocked, and when the aerogel particle content is greater than about 90 %, the binder content is relatively small, and accordingly, the second sheet 520 may not be formed. The size of an aerogel particle may be in a range of about 10 mm to about 100 mm and more than about 90 % of the aerogel particles may have nano-sized pores. The second sheet 520 may have a fine pore structure formed by a nano-sized composite structure connected in a SiO₂ structure, and air may be contained in the pore structure. The air contained in the pore structure may form an air layer. The air layer is maintained in the pores of an SiO₂ composite, and air has excellent insulating properties to be used as an insulating material. In another embodiment, the second sheet 520 may be formed of a flame retardant material. For example, the second sheet 520 may be ceramic paper of a refractory insulator including fiber. In another embodiment, the second sheet 520 may be bio-soluble fiber ceramic paper (e.g., ceramic fiber) including alkaline earth metal and may be an eco-friendly high-temperature refractory insulator that is harmless to the human body.

The second sheet 520 may be formed of a material different from the material of the first sheet 510. For example, the first sheet 510 may be formed of a flame-retardant material or a non-combustible material, and the second sheet 520 may be formed of a thermal insulating material. Therefore, the first spacer 500 may include a stack of the plurality of first sheets 510 and the plurality of second sheets 520 formed of a flame retardant material and an insulating material, and accordingly, when the temperature of the battery cell C increases and, if a fire occurs, heat or fire from the battery cell C may be prevented from being transferred to the adjacent battery cell C. The first sheet 510 may have substantially the same size and shape as the second sheet 520. The first sheet 510 may be coupled to the second sheet 520 by an adhesive material applied to at least one of the first and second sheets 510 and 520, mechanical force, or welding.

The adhesive member 530 may include a plurality of adhesive members 530 and may be on the first sheet 510 to attach adjacent battery cells C to the first spacer 500. The plurality of adhesive members 530 may be on a surface of the first sheet 510, which face the battery cell C, and may be separated from each other. For example, as illustrated in FIG. 5, two adhesive members 530 may be respectively at edges (or corners) near the short sides of the first sheet 510. The adhesive members 530 including adhesive materials may be respectively on one side facing the first sheet 510 and on the other side opposite to the first sheet 510. The first spacer 500 may be adhered to and supported on the battery cell C by the adhesive member 530. The adhesive member 530 may form an exposed region where at least a part of the first sheet 510 is exposed toward the battery cell C. For example, the adhesive member 530 may only be in a partial region of the first sheet 510 of which at least a part is exposed without covering the entire surface of the first sheet 510. The portion with the adhesive member 530 may be coupled to the battery cell C, and the exposed region may form a free space (e.g., a void or open space) that allows for volume expansion due to swelling of the battery cell C. Accordingly, the internal stress caused by the swelling of the battery cell C may be reduced, and a durability problem of a restraining mechanism (e.g., the end plate 400) due to the accumulation of internal stress may be resolved. For example, the adhesive member 530 may adhere the first spacer 500 to the battery cell C and also has a thickness for forming a gap between the battery cell C and the first spacer 500.

The second spacer 600 may be inserted between adjacent battery cells C. In some cases, the second spacer 600 may be between the end plate 400 and the battery cell C at an end of the battery module 10 from among the plurality of battery cells C. For example, the plurality of battery cells C and the plurality of second spacer 600 may be alternately arranged. The second spacer 600 may have a thin plate shape and may insulate adjacent battery cells C from each other to prevent the adjacent battery modules C from coming into contact with each other. Also, the second spacer 600 may prevent adjacent battery cells C from being damaged or deformed due to direct contact with or pressing against each other. Also, the second spacer 600 may maintain an interval between adjacent battery cells C and may form a passage for external air. Accordingly, the plurality of battery cells C may be effectively cooled, and a movement path for a fire extinguishing agent may be provided. In addition, at least a part of the second spacer 600 may include a flame-retardant material and/or an insulating material or may include an additional member formed of a flame-retardant material and/or an insulating material, and accordingly, a fire occurring in one battery cell C may be prevented from spreading to another battery cell C. The second spacer 600 may have a width corresponding to the battery cell C and may have a height less than or equal to a height of the battery cell C. The second spacer 600 may be separated from the battery cell C. For example, the second spacer 600 may be separated from two adjacent battery cells C by a distance (e.g., a preset or predetermined distance). The second spacer 600 may be separated from the battery cell C by in a range of about 0.1 mm to about 10 mm. In another embodiment, the second spacer 600 may be separated from the battery cell C by a range of about 0.5 mm to about 8 mm. In another embodiment, the second spacer 600 may be separated from the battery cell C by a range of about 1 mm to about 5 mm. In another embodiment, the separated distance may be a thickness of an adhesive member 630, described below, and may be the same as an interval between the battery cell C and a second sheet 520 of a first spacer 500. The second spacer 600 may be one of the plurality of first spacers 500. In another embodiment, the second spacer 600 may be separate from the first spacer 500. The second spacer 600 may be the first spacer 500 at the center of the battery module 10 in a longitudinal direction (e.g., the X-axis direction) from among the plurality of first spacers 500.

The second spacer 600 may include a first sheet 610, a second sheet 620, an adhesive member 630, and a protrusion portion 640. For example, a plurality of first sheets 610 and a plurality of second sheets 620 may each include an edge portion in at least one corner, and at least a part of the protrusion portion 640 may be inserted into or coupled to the edge portion 621.

The second spacer 600 may include a plurality of first sheets 610, which are formed of an insulating and/or thermal insulating material. The first sheet 610 may have the same or similar size and shape as the second spacer 600. For example, the first sheet 610 may have a rectangular shape elongated in a width direction (e.g., the Y-axis direction) of the battery module 10. The second spacer 600 may include the plurality of first sheets 610. For example, as illustrated in FIG. 6, two first sheets 610 may be respectively on one side and the other side of the second sheet 620, and accordingly, a total of two first sheets 610 may be included in one second spacer 600. In another embodiment, one first sheet 610 may be on one side or the other side of the second sheet 620, or two or more first sheets 610 may be on one side and the other side of the second sheet 620. The first sheet 610 may be formed of a material with excellent thermal insulation properties. For example, the first sheet 610 may be mica or ceramic paper. Also, the first sheet 610 may include (or may further include) aerogel. The aerogel particle content is more than about 80 %, and the remainder may be formed of a binder. The aerogel particle content may be in a range of about 80 % to about 90 %. When the aerogel particle content is less than about 80 %, heat propagation between adjacent battery cells C may not be sufficiently blocked, and when the aerogel particle content is greater than about 90 %, the binder content is relatively small, and accordingly, the first sheet 610 may not be formed. The size of an aerogel particle may be in a range of about 10 mm to about 100 mm and more than about 90 % of the aerogel particles may have nano-sized pores. The first sheet 610 may be formed in a form in which a fine pore structure is formed in a nano-sized composite structure connected in a SiO₂ structure, and air may be contained in the pore structure. The air contained in the pore structure may form an air layer. The air layer is maintained in the pores of an SiO₂ composite, and air has excellent insulating properties to be used as an insulating material. In another embodiment, the first sheet 610 may be formed of a flame retardant material. For example, the first sheet 610 may be ceramic paper of a refractory insulator including fiber. In another embodiment, the first sheet 610 may be bio-soluble fiber ceramic paper (e.g., ceramic fiber) including alkaline earth metal and may be an eco-friendly high-temperature refractory insulator that is harmless to the human body.

The second spacer 600 may include a plurality of second sheets 620, which are formed of an insulating and/or thermal insulating material. The second sheet 620 may have the same or similar size and shape as the second spacer 600. For example, the second sheet 620 may have a rectangular shape with a long side in a width direction (e.g., the Y-axis direction) of the battery module 10. The second sheet 620 may be between two of the plurality of first sheets 610. For example, as illustrated in FIG. 6, one second sheet 620 may be between two first sheets 610. In another embodiment, the plurality of second sheets 620 may be between the plurality of first sheets 610, or the plurality of second sheets 620 may be alternately arranged with the plurality of first sheets 610. The second sheet 620 may be formed of a material with excellent thermal insulation properties. For example, the second sheet 620 may be mica or ceramic paper. Additionally, the second sheet 620 may include (or may further include) aerogel. The aerogel particle content is more than about 80%, and the remainder may be made up of a binder. The aerogel particle content may be in a range of about 80 % to about 90 %. When the aerogel particle content is less than about 80 %, heat propagation between adjacent battery cells C may not be sufficiently blocked, and when the aerogel particle content is greater than about 90 %, the binder content is relatively small, and accordingly, the second sheet 620 may not be formed. The size of an aerogel particle may be in a range of about 10 mm to about 100 mm and more than about 90 % of the aerogel particles may have nano-sized pores. The second sheet 620 may have a fine pore structure formed by a nano-sized composite structure connected in a SiO₂ structure, and air may be contained in the pore structure. The air contained in the pore structure may form an air layer. The air layer is maintained in the pores of an SiO₂ composite, and air with excellent insulating properties may be used as an insulating material. In another embodiment, the second sheet 620 may be formed of a flame retardant material. For example, the second sheet 620 may be ceramic paper of a refractory insulator including fiber. In another embodiment, the second sheet 620 may be bio-soluble fiber ceramic paper (e.g., ceramic fiber) including alkaline earth metal and may be an eco-friendly high-temperature refractory insulator that is harmless to the human body.

The second sheet 620 may be formed of a material different from the material of the first sheet 610. For example, the first sheet 610 may be formed of a flame-retardant material or a non-combustible material, and the second sheet 620 may be formed of a thermal insulating material. Therefore, the second spacer 600 may include a stack of the plurality of first sheets 610 and the plurality of second sheets 620 formed of a flame retardant material and an insulating material, and accordingly, when the temperature of the battery cell C increases and if a flame occurs, heat or flame from the battery cell C may be prevented from being transferred to the adjacent battery cell C. The first sheet 610 may have substantially the same size and shape as the second sheet 620. The first sheet 610 may be coupled to the second sheet 620 by an adhesive material applied to at least one of the first and second sheets 610 and 620, mechanical force, or welding.

The second sheet 620 may have an edge portion 621. The edge portion 621 may be formed continuously or discontinuously at one or more corners of the second sheet 620. For example, the edge portion 621 may be continuously formed across the entire edge of the second sheet 620 and may protrude in a length direction (e.g., the X-axis direction) of the battery module 10. The edge portion 621 may be formed of a plastic material and may be coupled to an edge of the second sheet 620 by insert injection (e.g., insert injection molding), thereby maintaining a shape of the second sheet 620. For example, the edge portion 621 may be formed of polyethylene or polypropylene. A width of the edge portion 621 may be in a range of about 3 mm to about 6 mm. When the width of the edge portion 621 is less than about 3 mm, the second sheet 620 may not be easily fixed, and when the width of the edge portion 621 exceeds about 6 mm, the edge portion 621 formed of plastic may be burnt.

The adhesive member 630 may include a plurality of adhesive members 630 and may be on the first sheet 610 to attach adjacent battery cells C to the second spacer 600. The plurality of adhesive members 630 may be on a surface of the first sheet 610, which face the battery cell C, and separated from each other. For example, as illustrated in FIG. 6, two adhesive members 630 may be respectively at corners near the short sides of the first sheet 610. The adhesive members 630 including adhesive materials may be respectively on one side facing the first sheet 610 and on the other side opposite to the first sheet 610. The second spacer 600 may be adhered to and supported on the battery cell C by the adhesive member 630. The adhesive member 630 may form an exposed region where at least a part of the first sheet 610 is exposed toward the battery cell C. For example, the adhesive member 630 may be only in a partial region of the first sheet 610 of which at least a part is exposed without covering the entire surface of the first sheet 610. The portion with the adhesive member 630 may be coupled to the battery cell C, and the exposed region may form a free space (e.g., a void) that allows for volume expansion due to swelling of the battery cell C. Accordingly, internal stress caused by the swelling of the battery cell C may be reduced, and a durability problem of a restraining mechanism (e.g., the end plate 400) due to the accumulation of internal stress may be mitigated or resolved.

The second sheet 620 may include a protrusion portion 640, and the protrusion portion 640 may include a plurality of protrusion portions 640. For example, the plurality of protrusion portions 640 may be at both ends of the battery module 10 in a width direction (e.g., the Y-axis direction), and in such an embodiment, two protrusion portions 640 may be respectively at both ends of the battery module 10. At least a part of the protrusion portion 640 may be inserted into or coupled to the edge portion 621, and the other part may extend in a width direction (e.g., the Y-axis direction) of the battery module 10. The protrusion portion 640 may be inserted into the coupling slit 113 to fix the second spacer 600 to the side plate 100 and to prevent the center of the battery module 10 from bending due to a weight of the battery module 10. At least a part of the protrusion portion 640 may pass through the side plate 100 and be bent toward an outer surface of the side plate 100 to be fixed to the outer surface of the side plate 100. The protrusion portion 640 may be formed of a material with excellent processability, corrosion resistance, high temperature strength, and weldability. For example, the protrusion portion 640 may be formed of stainless steel, such as martensite, ferrite, or austenite. Therefore, the protrusion portion 640 may be easily bent after being inserted into the side plate 100, may be welded to the side plate 100, and may not be easily corroded even when exposed to the outside of the side plate 100.

The protrusion portion 640 may include a body 641, a protrusion 642, and a groove 643. For example, the protrusion 642 may include a plurality of protrusions 642 separated from each other in one direction (e.g., in a height direction of the battery module 10 or the Z-axis direction), and the groove 643 may include a plurality of grooves 643 between adjacent ones of the protrusions 642.

The body 641 may connect the protrusion portion 640 to the second sheet 620, for example, to the edge portion 621 thereof. At least a part of the body 641 may be inserted into the edge portion 621 or may be connected to an edge of the edge portion 621. For example, the edge portion 621 may have a slit at an end into which the body 641 may be inserted into or from which the body 641 may be removed, and the body 641 may be inserted into the slit to be fixed to the slit. In another embodiment, the edge portion 621 may be coupled to a part of the body 641 by insert injection. A part of the body 641 may be exposed to the outside of the edge portion 621, and the protrusion 642 and the groove 643 may be formed in the body 641. A length of the body 641 exposed to the outside of the edge portion 621, that is, a length from the end of the edge portion 621 to the end of the body 641 is referred to as L2, and the length L2 may be less than a length L1 of the protrusion 642. By reducing the length L2 of the body 641 exposed to the outside of the edge portion 621, a part of the body 641 inserted into the edge portion 621 may be enlarged, and deformation and damage of the body 641 due to an external shock may be reduced.

The protrusion 642 may extend from the body 641 in one direction (e.g., outwardly in a width direction of the battery module 10). The protrusion 642 may have various shapes, for example, a rectangular shape with a width W in a longitudinal direction (e.g., the X-axis direction) of the battery module 10. The protrusion 642 may be inserted into the coupling slit 113 such that at least a part of the protrusion 642 is exposed to the outside of the side plate 100. In this state, the protrusion 642 may be bent toward an outer surface of the side plate 100 to be fixed to the side plate 100 by welding or screwing. The width W of the protrusion 642 may be less than a width of the coupling slit 113. As illustrated in FIG. 8, when the coupling slit 113 has a width G1, the width W of the protrusion 642 may be less than the width G1. Also, the width W of the protrusion 642 may be greater than an interval G2 between the protrusion 642 and the coupling slit 113. Therefore, the protrusion 642 may be smoothly inserted into the coupling slit 113, a gap between the protrusion 642 and the coupling slit 113 may be reduced, and thereby, the protrusion 642 inserted into the coupling slit 113 may not be easily separated from the coupling slit 113. The plurality of protrusions 642 may be arranged in parallel in a height direction (e.g., the Z-axis direction) of the battery module 10.

The plurality of grooves 643 may be arranged alternately with the plurality of protrusions 642. For example, the plurality of protrusions 642 may be arranged in the height direction (e.g., the Z-axis direction) of the battery module 10, and the plurality of grooves 643 may each be between two adjacent ones of the protrusions 642. In a state where the protrusion 642 is inserted into the coupling slit 113, the protrusion 642 may be supported on an inner surface of the side plate 100, for example, on the inner plate 120. When the protrusion 642 passes through the heat dissipation slit 121 formed in the inner plate 120 to be inserted into the coupling slit 113, the groove 643 may be supported between two heat dissipation slits 121 adjacent to each other in a height direction (e.g., the Z-axis direction) of the battery module 10. As the protrusion 642 passes through the heat dissipation slit 121 to be inserted into the coupling slit 113, the flow of the protrusion portion 640 and a weight of the battery module 10 transferred through the protrusion portion 640 may be evenly distributed to the outer plate 110 and the inner plate 120, and thus, damage and deformation of the side plate 100 may be further reduced. A height H2 of the groove 643 may be less than a height H1 of the protrusion 642. Therefore, an area of the portion where the protrusion 642 is inserted into the coupling slit 113 may be relatively increased. The number of protrusions 642 and grooves 643 may be varied depending on the size and weight of the battery module 10. For example, in the embodiment illustrated in FIG. 7, the protrusion portion 640 may include four protrusions 642 and three grooves 643 between the four protrusions 642. In other embodiments, however, the number of protrusions 642 may be four or less or more, and the number of grooves 643 may be varied depending on the number of protrusions 642.

Next, a process of inserting the protrusion portion 640 into the coupling slit 113 is described. FIG. 8 illustrates only the side plate 100 and the second spacer 600 for the sake of convenience of description, and an opposite side of the second spacer 600 may also be coupled to the opposite side plate 100 in the same manner. When the protrusion portion 640 of the second spacer 600 is inserted into the coupling slit 113 of the side plate 100, the protrusion 642 may protrude to the outside of the coupling slit 113. In this state, the protrusion 642 may pass through the heat dissipation slit 121 to be inserted into the coupling slit 113, and the groove 643 may be in contact with an inner surface of the inner plate 120 between two heat dissipation slits 121 adjacent to each other in a height direction (e.g., the Z-axis direction) of the battery module 10. In another embodiment, the protrusion 642 may pass between two adjacent heat dissipation slits 121 in a longitudinal direction (e.g., the X-axis direction) of the battery module 10 to be inserted into the coupling slit 113, and the groove 643 may be in contact with the inner surface of the inner plate 120.

Next, the plurality of protrusions 642 may be bent toward the outer surface of the side plate 100, for example, the outer plate 110. At least some of the plurality of protrusions 642 may be in contact with the outer plate 110. For example, as illustrated in the enlarged view in FIG. 9, at least a part of a surface of each of the plurality of protrusions 642 facing the outer surface of the outer plate 110 may be in contact with the outer surface of the outer plate 110. In this state, the plurality of protrusions 642 may be fixed to the outer plate 110 by welding, screwing, adhesive, or so on. For example, the plurality of protrusions 642 may be fixed to the outer plate 110 by spot welding. When the protrusion 642 is inserted into and fixed to the side plate 100 in this way, the protrusion 642 may resist such that the center is not bent or deformed due to a weight of the battery module 10 or external shock. For example, when force is applied to the center of the battery module 10, the second spacer 600 at the center of the battery module 10 distributes the load to the side plate 100, and accordingly, the rigidity and durability of the battery module 10 may be increased.

Although one second spacer 600 is illustrated in the drawings, the second spacer 600 may include a plurality of second spacers 600. For example, the second spacer 600 may include the plurality of second spacers 600, one of the plurality of second spacers 600 may be at the center of the battery module 10 in a longitudinal direction (e.g., the X-axis direction), and other ones of the second spacers 600 may be between two battery cells from among the plurality of battery cells C between the second spacer 600 at the center and two end plates 400. The second spacer 600 may include the protrusion portion 640, the protrusion portion 640 may be coupled to the side plate 100 in the manner described above, and thus, a load of the battery module 10 or an external load may be further distributed to the side plates 100.

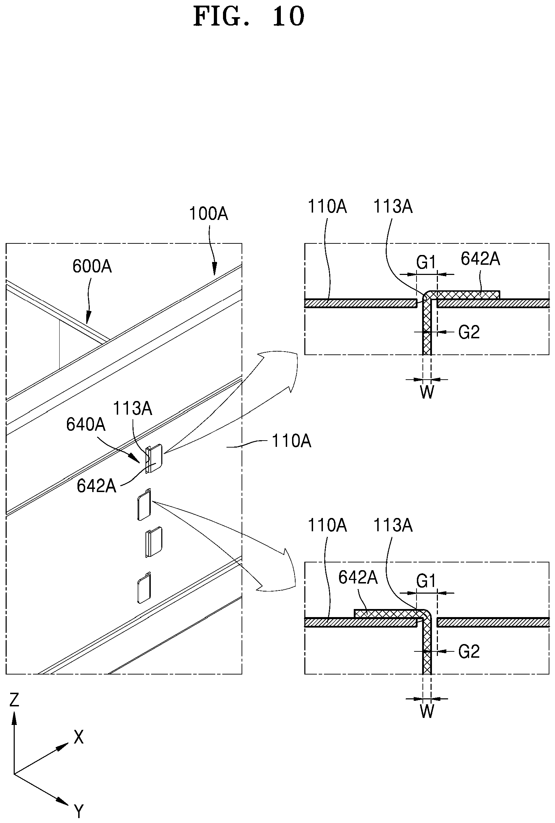

FIG. 10 illustrates a second spacer 600A in which a plurality of protrusions 642A are bent in different directions to be fixed to the side plate 100A. Similar to the second spacer 600, the second spacer 600A may include a first sheet, a second sheet, an adhesive member, and a protrusion portion 640A. The protrusion portion 640A may include a body, a protrusion 642A, and a groove. Also, the side plate 100A may include an outer plate and an inner plate 110A, and a plurality of coupling slits 113A may be formed in the inner plate 110A. At least some of the plurality of protrusions 642A may be bent in different directions after being inserted into corresponding coupling slits 113A. For example, the plurality of protrusions 642A may be alternately bent in one direction and the other direction in a longitudinal direction (e.g., the X-axis direction) of the battery module 10 and fixed to an outer surface of the side plate 100A. In addition, other configurations of the side plate 100A and the second spacer 600A may be respectively identical to the side plate 100 and the second spacer 600, and accordingly, the following description is focused on the plurality of protrusions 642A. For example, as illustrated in FIG. 10, the uppermost protrusion 642A may be bent to one side (e.g., to the right side of FIG. 10), and the protrusion 642A thereunder may be bent to another side (e.g., to the left side of FIG. 10). In addition, the plurality of protrusions 642A may be bent in different directions in a height direction (e.g., the Z-axis direction) of the battery module 10. In this way, the plurality of protrusions 642A may be bent in different directions and fixed to the outer surface of the side plate 100, and accordingly, the plurality of protrusions 642A may more firmly resist an external load and so on that are applied in one direction. Therefore, the plurality of protrusions 642A may be prevented from being separated from the plurality of coupling slits 113A of the side plate 100A.

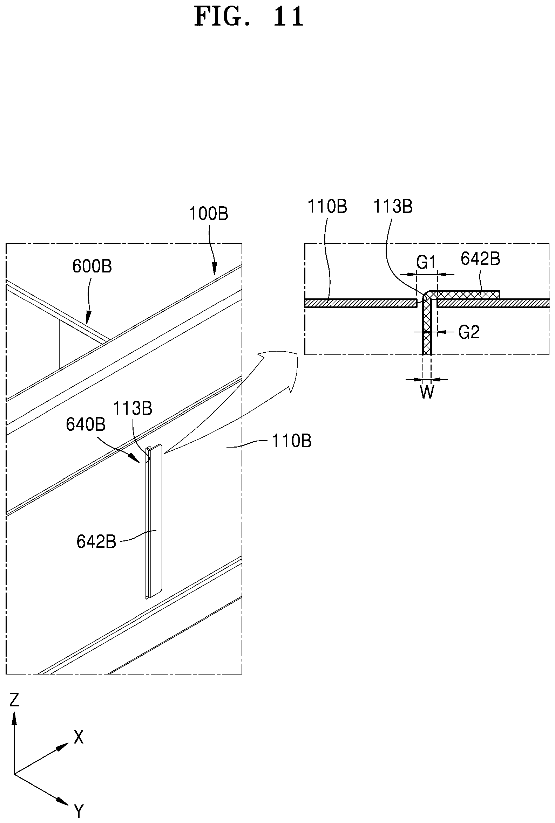

FIG. 11 illustrates a second spacer 600B in which a protrusion 642B integrally formed is fixed to a side plate 100B. Similar to the second spacer 600, the second spacer 600B may include a first sheet, a second sheet, an adhesive member, and a protrusion portion 640B. The protrusion portion 640B may include a body, a protrusion 642B, and a groove. Also, the side plate 100B may include an outer plate and an inner plate 110B, and a coupling slit 113B may be formed in the inner plate 110B. In addition, the other configurations of the side plate 100B and the second spacer 600B may be respectively identical or substantially similar to the side plate 100 and the second spacer 600, and accordingly, the below description is focused on the protrusion 642B. The protrusion 642B may be formed as one member (one piece). For example, different from the protrusion portion 640 including the plurality of protrusions 642, the protrusion portion 640B may include one protrusion 642B. Also, the coupling slit 113B may also be one slit corresponding to a shape of the protrusion 642B. The protrusion 642B may extend in a height direction (e.g., the Z-axis direction) of the battery module 10 and may be inserted into the coupling slit 113B and bent to an outer surface of the side plate 100B to be fixed to the outer surface. Therefore, a contact area between the protrusion 642B and the side plate 100B may be increased, and accordingly, the coupling between the protrusion 642B and the side plate 100B may be maintained more firmly.

The battery module 10 may further include a bottom plate. The bottom plate may be on the bottom of the plurality of battery cells C and may be connected to the side plates 100 and the end plates 400. The bottom plate may partition a space, together with the side plate 100 and the end plate 400, in which the plurality of battery cells C are accommodated.

Although the present disclosure is described with reference to the embodiments illustrated in the drawings, the embodiments are merely examples. Those skilled in the art may fully understand that various modifications and equivalent other embodiments are possible from the embodiments. Therefore, the true technical protection scope of the present disclosure should be determined based on the attached claims and their equivalents.

The battery module, according to embodiments of the present disclosure, may be prevented from bending or damage by distributing the load caused by an external load or shock, or a weight of the battery module.

In the battery module, according to embodiments of the present disclosure, at least a part of a spacer between battery cells protrudes from a side plate and is supported by the side plate, and thus, the load applied to the battery module, particularly the load applied to the center in a length direction of the battery module, may be distributed to the side plate.

In the battery module, according to embodiments of the present disclosure, a protruding portion of a spacer protrudes toward a side plate and is bent to be fixed to the side plate, and thus, the spacer may be stably supported on the side plate.

It should be understood that the embodiments described herein should be considered in a descriptive sense and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure as defined by the following claims and their equivalents.

## Claims

1. A battery module comprising:
a plurality of battery cells;
a side plate on a side of the plurality of battery cells;
a holder on the plurality of battery cells;
a bus bar on the holder and connecting the plurality of battery cells to each other;
an end plate connected to the side plate and supporting the plurality of battery cells;
a first spacer between two adjacent ones of the plurality of battery cells; and
a second spacer between two adjacent other ones of the plurality of battery cells, the second spacer comprising a protrusion portion, at least a part of the protrusion portion of the second spacer passing through the side plate and being supported on an outer surface of the side plate.

2. The battery module of claim 1, wherein the part of the protrusion portion passing through the side plate is bent toward and fixed to the outer surface of the side plate.

3. The battery module of claim 1 or claim 2, wherein the second spacer is at a center of the battery module in a longitudinal direction of the battery module.

4. The battery module of any one of the preceding claims, further comprising a plurality of the second spacers,
wherein a first one of the second spacers is at a center of the battery module in a longitudinal direction of the battery module, and a second one of the second spacers is between the end plate and the first one of the second spacers.

5. The battery module of any one of the preceding claims, wherein the second spacer further comprises a plurality of sheets and has an edge portion at an edge of at least one of the sheets, and
wherein another part of the protrusion portion is inserted into or connected to the edge portion.

6. The battery module of claim 5, wherein the protrusion portion comprises a protrusion and a groove,
wherein the protrusion portion further comprises a body, at least a part of the body being inserted into or connected to the edge portion and on which the protrusion and the groove are formed, and
wherein a length of the protrusion is longer than a length from an end of the edge portion to an end of the body.

7. The battery module of any one of the preceding claims, wherein the protrusion portion comprises a protrusion and a groove, and
wherein the protrusion is inserted into a coupling slit in the side plate and is bent toward the outer surface of the side plate.

8. The battery module of claim 7, wherein the protrusion comprises a plurality of protrusions separated from each other in one direction, and
wherein the groove comprises a plurality of grooves respectively between adjacent ones of the plurality of protrusions.

9. The battery module of claim 8, wherein:
(i) the plurality of protrusions are arranged in parallel in a height direction of the battery module; and/or
(ii) the plurality of protrusions are bent in a same direction after being respectively inserted into a plurality of the coupling slits.

10. The battery module of claim 8, wherein at least some of the plurality of protrusions are bent in a direction that is different from a direction in which other ones of the protrusions are bent after passing through the plurality of coupling slits.

11. The battery module of claim 7, wherein the protrusion extends in a height direction of the battery module and is formed as one piece.

12. The battery module of any one of claims 7 to 11, wherein:
(i) a width of the protrusion is less than a width of the coupling slit and greater than an interval between the protrusion and the coupling slit; and/or
(ii) a height of the protrusion is greater than a height of the groove.

13. The battery module of any one of the preceding claims, wherein the side plate comprises an outer plate having a coupling slit into which the part of the protrusion is inserted and an inner plate on an inner surface of the outer plate and having a heat dissipation slit, and
wherein the part of the protrusion portion passing through the coupling slit is fixed to an outer surface of the outer plate.

14. The battery module of claim 13, wherein the heat dissipation slit comprises a plurality of heat dissipation slits, and
wherein the coupling slit is aligned with one or more of the plurality of heat dissipation slits.

15. The battery module of claim 13, wherein the heat dissipation slit comprises a plurality of heat dissipation slits, and
wherein the coupling slit comprises a plurality of coupling slits respectively provided between two adjacent ones of the heat dissipation slits in one direction.
